# EUROPÄISCHE PATENTSCHRIFT

(11) **EP 1 080 313 B1**
(45) Veröffentlichungstag und Bekanntmachung des Hinweises auf die Patenterteilung: **14.12.2005**
(21) Anmeldenummer: 99923599.7
(22) Anmeldetag: 14.05.1999
(51) Int. Cl.: F16C 23/04, F16C 33/04

(54) **RADIALLAGER IN GLEITLAGERBAUART**
RADIAL BEARING WITH A SLIDING BEARING-TYPE CONSTRUCTION
PALIER RADIAL DE TYPE PALIER LISSE

(30) Priorität: 29.05.1998 DE 19824128
(43) Veröffentlichungstag der Anmeldung: 07.03.2001
(73) Patentinhaber: KSB Aktiengesellschaft, 67227 Frankenthal (DE)
(72) Erfinder: DIEDERICH, Ralf, D-67259 Beindersheim (DE); SCHÄFER, Horst, D-27404 Rhade (DE); USBECK, Anna, D-67549 Worms (DE)
(86) Internationale Anmeldenummer: PCT/EP1999/003340
(87) Internationale Veröffentlichungsnummer: WO 1999/063239

(56) Entgegenhaltungen:
- EP-A- 0 345 214
- EP-A- 0 426 013
- EP-A- 0 490 235
- EP-A- 0 492 605
- EP-A- 0 598 923
- FR-A- 2 266 820
- PATENT ABSTRACTS OF JAPAN vol. 95, no. 11, 26. Dezember 1995 (1995-12-26) & JP 07 224836 A (MITSUBISHI), 22. August 1995 (1995-08-22)
- PATENT ABSTRACTS OF JAPAN vol. 14, no. 266 (M-0982), 8. Juni 1990 (1990-06-08) & JP 02 076927 A (TOSHIBA), 16. März 1990 (1990-03-16)

## Beschreibung

Die Erfindung betrifft ein Radiallager in Gleitlagerbauart, insbesondere zur Verwendung in Kreiselpumpen, mit einer auf einer Welle angeordneten, drehmomentübertragend gestalteten Lagerhülse, die innerhalb einer Lagerbuchse rotierend angeordnet ist, wobei zwischen den aufeinander gleitenden Teilen ein Spalt für ein Schmiermedium geringer Viskosität befindlich ist, die Lagerhülse aus einem Tragelement und einem darauf befestigten und daran anliegenden Lagerelement besteht, und das Tragelement im Bereich der Anlage des Lagerelementes unterschiedliche Wandstärken aufweist.

Bei Kreiselpumpen sind verschiedene Ausführungsformen von Wellenlagerungen bekannt, wobei in Abhängigkeit vom Fördermedium verschiedene Lagermaterialien Verwendung finden. Keramische Lagermaterialien haben sich als besonders vorteilhaft bei Lagern erwiesen, die mit einem Fördermedium geringer Viskosität, beispielsweise mit Wasser oder Alkohol, geschmiert werden. Nachteilig bei derartigen Keramiklagem ist deren Empfindlichkeit gegen Überhitzungen durch Mangelschmierung und stoßartige Belastungen. Eine solche existiert im Mischreibungsgebiet, wenn beispielsweise durch zu hohe Radiallasten die Gleitflächen einander berühren. Durch einen zu hohen lokalen Eintrag von Reibungswärme in die keramischen Oberflächen können sich dabei innerhalb der Keramik Wärmespannungsrisse bilden. Dadurch besteht die Gefahr einer lokalen starken Materialüberlastung, wodurch als Folge an dem Keramikteil Risse oder Ausplatzungen entstehen und mit Folgeschäden zu rechnen ist.

Eine zusätzliche Belastung wirkt auf eine solche, aus einer stillstehenden Lagerbuchse und einer rotierenden Lagerhülse bestehenden Lagerung, wenn zwischen diesen Teilen ein Winkelversatz auftritt. Beispielsweise durch die DE-A-1 528 640 ist es bei solchen Lagerungen bekannt, die Lagerbuchse gegenüber einem Gehäuse mittels O-Ringen elastisch anzuordnen, um eine leichte Beweglichkeit zu erreichen.

Eine andere Lösung ist durch die EP 0 492 605 A bekannt, von der als nächstliegender Stand der Technik ausgegangen wird. Diese zeigt ein keramisches Lagerelement, welches unter Zwischenschaltung eines im Bereich des Innendurchmessers befestigten Gummielementes formschlüssig mit einer profilierten Welle verbunden ist. Die Welle kann ein Querschnittsprofil aufweisen, welches als Vielkeil, Sechskant, Zweiflach oder dergleichen ausgebildet ist. Zur formschlüssigen Kräfteübertragung verfügt das Gummielement im Bereich seines Innendurchmessers über eine Formgebung, die quasi der Negativform der Welle entspricht. Somit besteht das Gummielement gewissermaßen aus aneinander liegenden Zylinderabschnitten, wobei jeder Zylinderabschnitt einen zwar anderen Querschnitt aufweist, aber in Längsrichtung der Welle konstant bleibt. Da an beiden Stirnseiten der Wellenbuchse Scheiben angeordnet sind, ist das Gummielement zwischen der Keramikbuchse, den Scheiben und der Profilwelle gekammert angeordnet.

Bei großen mehrstufigen Pumpen oder langen Wellen mit dazwischen angeordneten Lagern, beispielsweise bei großen Speisepumpen, bei Bohrlochwellenpumpen oder bei fliegenden Lagerungen mit einseitigem Wellenüberhang, treten aufgrund der im Betrieb vorherrschenden Kräfte Schrägstellungen oder Durchbiegungen der Welle auf. Als Folge davon nimmt die mit der Welle rotierende Lagerhülse ebenfalls eine Schrägstellung ein. Eine daraus resultierende einseitige Lagerbelastung stellt eine weitere Gefährdung für gegen Schlag- oder Stoßbelastungen empfindliche keramische Lager dar.

Der Erfindung liegt daher das Problem zugrunde, eine bruchempfindliche Materialien verwendende Wellenlagerung zu entwickeln, die einen in der Lagerung auftretenden Winkelversatz zuläßt.

Die Lösung dieses Problems sieht vor, daß eine überwiegend matrixartig angeordnete Faserstruktur mit darin angeordneten Keramik- oder Kohlenstoffteilen das Lagerelement bildet, daß eine Keramik- oder Kohlenstoff-Matrix die Faserstruktur bildet, daß das Tragelement gleich oder länger als das Lagerelement ausgebildet ist und daß von einem Wandstärkenmaximum im mittleren Bereich des Tragelementes die Wandstärke in Richtung zu den Stirnseiten des Lagerelementes abnehmend ausgebildet ist.

Im Längsschnitt betrachtet weist das Tragelement einen Wandstärkenverlauf auf, der im mittleren Bereich ein Maximum hat und davon ausgehend zu beiden Seiten hin abnehmend gestaltet ist. Auf das Tragelement ist das eine überwiegende matrixartige Faserstruktur aufweisende keramische oder kohlenstoffliche Lagerelement mit einem Schrumpf- oder Preßsitz aufgepreßt. Die Abmessungen und Toleranzen der einzelnen Teile sind so gewählt, daß bei Temperatureinwirkungen das Lagerelement fest mit dem Tragelement verbunden bleibt. Die Kombination eines solchen Lagerelementes mit einem eine Elastizität aufweisenden Tragelement ergibt den Vorteil, daß beim Auftreten eines Winkelversatz beide Teile elastisch nachgiebig reagieren und somit eine Bruchgefahr am Lagerelement verhindert wird. Die überwiegend matrixartig angeordnete Faserstruktur, die als Keramik- oder Kohlenstoffmatrix ausgebildet ist, in welche Keramik- oder Kohlenstoffteile eingebettet sind, weist im Gegensatz zu einem monolithischen Bauteil eine Nachgiebigkeit gegenüber Biegebelastungen auf. Je nach gewünschter Lagerpaarung können dabei in einer Kohlenstoffmatrix sowohl Keramik- als auch Kohlenstoffteile angeordnet werden. Gleiches gilt auch für eine Keramikmatrix.

Somit kann an solchen, an sich bruchempfindlichen und als Sinterteile erstellten Lagerelementen, eine bei Biegebelastungen auftretenden Zugspannungen beständigere Eigenschaft erzeugt werden. Die bei einer Biegebelastung in einem Hülsenquerschnitt eines solchen Lagerelementes auftretenden, bruchgefährdenden Zugspannungen werden durch die matrixartig angeordneten Fasern gegenüber einem reinen Sintermaterial um den Faktor 10 verbessert. Damit lassen sich Winkelabweichungen der Lagerung kompensieren.

Ist das Lagerelement durch eine Schrumpfverbindung mit dem Tragelement verbunden, so bewirken die Schrumpfkräfte des Lagerelementes die Ausbildung einer leicht balligen Form im gefügten Zustand. Da das Tragelement nach einer Ausgestaltung der Erfindung in demjenigen Bereich, in dem sich die Enden des Lagerelementes befinden, eine wesentlich dünnere Wandstärke aufweist als in seinem mittleren Bereich, bewirken die Schrumpfkräfte im Bereich der dünneren Wandstärken eine Durchmesserreduzierung. Eine aufgeschrumpfte Lagerbuchse mit ihrem überwiegend matrixartig aufgebauten Faserverbund, beispielsweise aus Siliziumkarbidfasem oder Kohlenstoffasern, verfügt damit über eine leicht ballig ausgebildete Oberfläche, welche den Ausgleich von Winkelabweichungen einer damit ausgerüsteten Wellenlagerung unterstützt. Die Kombination des mit einer matrixartigen Faserstruktur ausgestatteten Lagerelementes mit dem Tragelement, dessen Formgebung zu einer Federkennlinie um die radiale Achse führt, gewährleistet eine Winkelfehler ausgleichende Elastizität. Bei aufgepreßten Lagerelementen gewährleistet nur die elastische Nachgiebigkeit den Ausgleich von Winkelabweichungen.

Weitere Ausgestaltungen der Erfindung sind in den Unteransprüchen beschrieben. Den rotierenden Teil des Radiallagers, die Lagerhülse, bilden das Tragelement und das darauf befestigte Lagerelement. In einem mittleren Bereich des Lagerelementes ist das Tragelement mit einem Wandstärkenmaximum versehen, wobei die Abmessungen so gewählt sind, daß damit eine sichere Kräfteübertragung gewährleistet ist. Weiterhin dient der Bereich des Wandstärkenmaximum zur Aufnahme von Drehbewegungen übertragenden Mitteln zwischen Welle und Tragelement. Im Bereich von den Stirnseiten des Lagerelementes sind am Tragelement Wandstärkenminima vorgesehen. Sie unterstützen die Federwirkung des Tragelementes sowie die Ausbildung einer balligen Formgebung der Lagerfläche.

Im Bereich der Stirnseiten des Tragelementes kann mindestens ein dickwandiger, an die Welle herangeführter Endabschnitt vorgesehen sein, wobei dieser Endabschnitt mit Abstand zur Stirnseite des Lagerelementes angeordnet ist. Dazwischen ist die Wand des Tragelementes als ein elastisch nachgiebiger, dünnwandiger Abschnitt ausgebildet. Der im Bereich der Stirnseite des Tragelementes angeordnete dickwandige Endabschnitt kann auch drehmomentübertragende oder kräfteübertragende Ausgestaltungen aufweisen. Zur Anlage des Lagerelementes kann das Tragelement über eine stirnseitige Anlagefläche verfügen.

Das Merkmal, wonach die Stirnseiten des Tragelementes über die Stirnseiten des Lagerelementes hinausragen, reduziert das Auftreten von Spannungsspitzen und erlaubt eine positive Beeinflussung der Federkennlinie. Aufgrund der Anordnung eines Freiraumes zwischen der Welle und dem Tragelement im Bereich einer oder beider Stirnseiten des Lagerelementes wird ein Platz für den elastischen Ausgleich von Winkelfehlern geschaffen.

Ausgestaltungen der Erfindung sind in den Zeichnungen dargestellt und werden im folgenden näher beschrieben. Es zeigen die
- Fig. 1 - 3: verschiedene Ausführungsformen des Tragelementes, die
- Fig. 4: die Anordnung eines solchen Tragelementes in einem Lager ohne Win- kelversatz, die
- Fig. 5 u. 6: die Anordnung eines Tragelementes beim Auftreten eines Winkel- versatzes sowie ein zugehöriges Tragbild und die
- Fig. 7 u. 8: bei einer konventional ausgebildeten Lagerung analoge Darstellungen zu den Fig. 5 und 6.

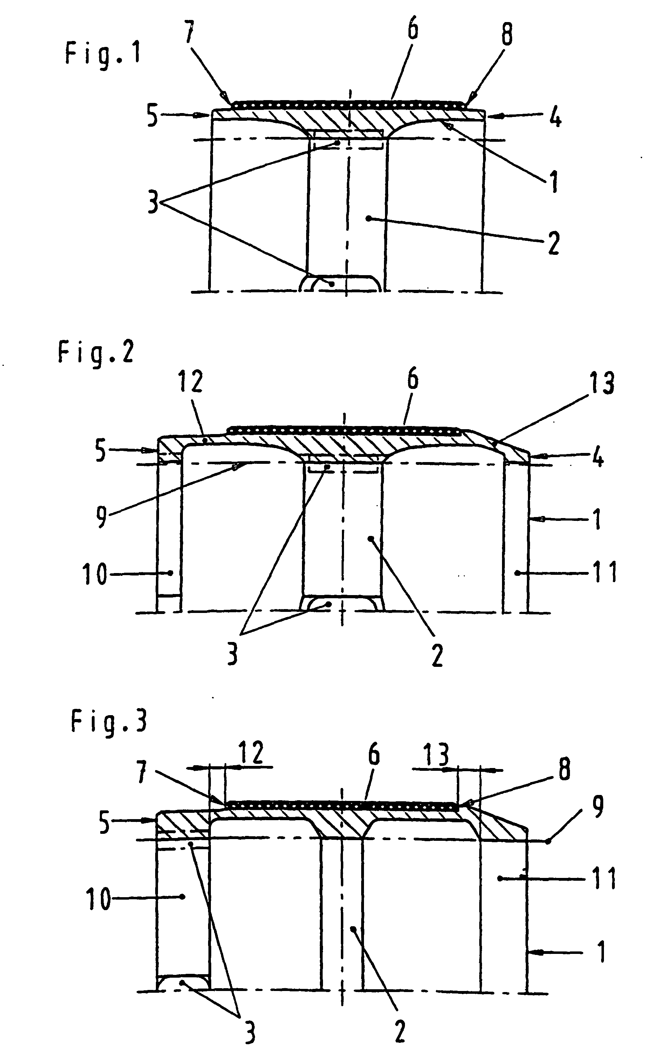

Die Fig. 1 zeigt im Längsschnitt ein Tragelement 1, welches metallischer oder nichtmetallischer Art sein kann, das im mittleren Bereich als Abschnitt 2 mit maximaler Wandstärke ausgebildet ist. Dieser Abschnitt 2 ist zur Übertragung von Drehmomenten ausgebildet und verwendet dafür bekannte Mittel 3, beispielsweise Nut/Federverbindungen. Vom mittleren Abschnitt 2 aus wird die Wandstärke des Tragelementes 1 zu den Stirnseiten 4, 5 hin zunehmend dünner. Ein solcher Wandstärkenverlauf weist einen Verlauf ohne scharfkantige Übergänge auf. Auf dem Außendurchmesser des Tragelementes 1 ist ein Lagerelement 6 befestigt, welches aus einer überwiegend matrixartig angeordneten Faserstruktur besteht, wobei eine Keramik- oder Kohlenstoffmatrix die Faserstruktur bildet. In die Matrix eingebettet sind Keramik- oder Kohlenstoffteile. Die axiale Länge des Lagerelementes 6 ist gleich oder kürzer als die axiale Länge des Tragelementes 1 ausgebildet. Die Stirnseiten 7, 8 des Lagerelementes 6 sind gegenüber den Stirnseiten 4, 5 des Tragelementes 1 zurückversetzt angeordnet. Eine solche Maßnahme verhindert im Übergang zwischen diesen beiden Teilen das Auftreten von Spannungsspitzen.

Der mittlere Abschnitt 2 des Tragelementes 1 stellt eine stegartige Verbindung zur Welle her. Ausgehend von dem Abschnitt 2 ist die Wandstärke des Tragelementes 1 zu den Stirnseiten 4,5 hin abnehmend gestaltet. Ein solche Form, die einen Freiraum zwischen einer Oberfläche 9 einer Welle und dem Tragelement 1 herstellt, kann in einfacher Weise, beispielsweise durch spanabhebende Bearbeitung, erzeugt werden.

In den Fig. 2 und 3 sind andere Ausführungsformen gezeigt, die ebenfalls elastische Eigenschaften einer so gebildeten Lagerhülse gewährleisten. Sie können bei größeren aufzunehmenden Radialkräften Verwendung finden. Die axiale Länge des Tragelementes 1 ist gegenüber der Ausführungsform von Fig. 1 vergrößert. Der Bereich der Stirnseiten 4, 5 des Tragelementes 1 wurde dabei so ausgebildet, daß eine Annäherung an die Oberfläche 9 einer nicht dargestellten Welle erfolgt.

Der Wellenoberfläche 9 gegenüberliegende Flächen 10, 11 der Stirnseiten 4, 5 des Tragelementes 1 sind in Fig. 2 unter Bildung eines Spaltes angeordnet. Damit besteht die Möglichkeit, eine unter dem Einfluß von Radialkräften erfolgende Durchbiegung des Tragelementes 1 durch das gezeigte Spiel zwischen den Flächen 10, 11 und der Oberfläche 9 zu beeinflussen. Durch geeignete Auswahl der Abmaße für eine zwischen diesen Teilen vorzusehende Spielpassung, ist in einfacher Weise eine Begrenzung der Durchbiegung möglich. Ein dünnwandiger Abschnitt 12, 13 des Tragelementes 1, der zwischen den Stirnseiten 7, 8 des Lagerelementes 6 und den Stirnseiten 4, 5 des Tragelementes 1 angeordnet ist, gewährleistet die Federungseigenschaften einer so gebildeten Lagerhülse eines Radiallagers. Mittels einer solchen Maßnahme ist die Ausbildung einer progressiven Federkennlinie möglich.

In der Darstellung von Fig. 2 ist auf der rechten Seite im Bereich der Stirnseite 4 ein anderer Verlauf des mit einer Fläche 11 der Wellenoberfläche 9 gegenüberliegenden Endes des Tragelementes 1 gezeichnet. Der Übergang 13 ist hier kegelförmig gezeichnet, es sind aber auch andere Übergänge in Form von Bögen o. dgl. möglich. Eine solche Gestaltung ist vorteilhaft bei einer Montage eines solchen Lagers und erlaubt ein leichteres Einführen. In der Darstellung der Fig. 2 ist linksseitig die Stirnseite 5 so ausgebildet, daß das Tragelement über die für eine Drehmomentübertragung notwendigen Mittel 3 geschoben werden kann.

Die Abwandlung der Fig. 3 sieht drehmomentübertragende Mittel 3 nur im Bereich der Stirnseite 5 des Tragelementes 1 vor. Zur Übertragung der auf das Lagerelement 6 einwirkenden Lagerkräfte liegt das Tragelement 1 im Bereich 2 und mit den Flächen 10, 11 auf der Oberfläche 9 einer Welle auf. Wesentlich ist hierbei, daß zwischen den die Länge des Lagerelementes 6 begrenzenden Stirnseiten 7, 8 und den Flächen 10, 11 des Tragelementes 1 ein dünnwandiger Abschnitt 12, 13 existiert. Ein solcher Abschnitt, wie er auch in Fig. 2 erkennbar ist, gewährleistet die Nachgiebigkeit einer solchen Einheit.

Die Ausführungsformen der Fig. 1 bis 3 zeigen zwar eine identische Länge des Lagerelementes 6; die Erfindung ist darauf aber nicht beschränkt. Deren Vorteile können auch durch andere Baulängen des Lagerelementes 6 erreicht werden.

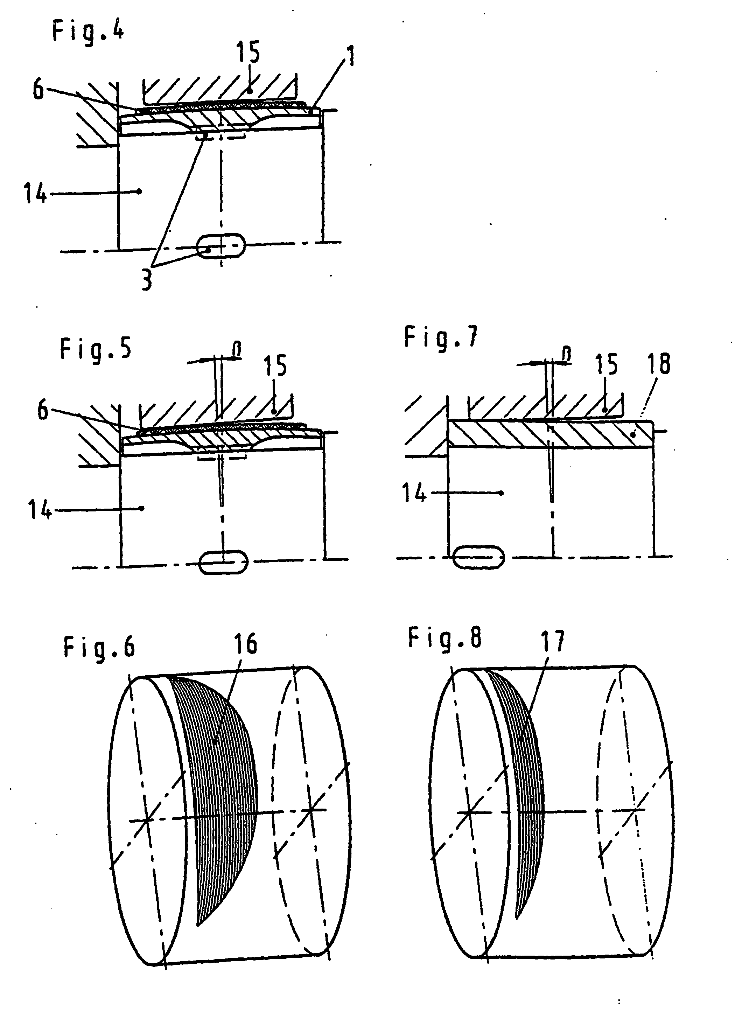

In der Fig. 4 ist eine montierte Lagerausführung unter beispielhafter Verwendung des Bauteiles von Fig.1 gezeigt. Auf einer Welle 14 ist ein Tragelement 1 aufgrund der Mittel 3 drehmomentübertragend angeordnet. Ein auf dem Tragelement 1 aufgeschrumpftes Lagerelement 6 wirkt mit einer Lagerbuchse 15 zusammen. Es ist gezeigt, wie die stimseitigen, dünnwandigen Enden des Tragelementes 1 unter dem Einfluß der Schrumpfkräfte eine ballige Form erhalten und zur Welle 14 hin verlaufen. Weiterhin wird in Verbindung mit dem in Richtung Stirnseite dünner werdenen Wandstärkenverlauf eine elastische Nachgiebigkeit ermöglicht und damit die Voraussetzung für eine Kompensation eines Winkelversatzes der Welle 14 gegenüber der Lagerbuchse 15 gewährleistet.

Die Fig. 5 und 6 zeigen ein Radiallager gemäß der Erfindung und beim Ausgleich von Winkelabweichungen. In Fig. 5 ist eine gegenüber einer stillstehenden Lagerbuchse 15 um den Winkel β schräggestellte, aus Tragelement 1 und Lagerelement 6 bestehende Lagerhülse gezeigt, die mit einer Welle 14 rotiert. Die zugehörige perspektivische Darstellung der Fig. 6, eine Draufsicht auf eine unter Krafteinwirkung verformte Lagerhülse, zeigt eine große Kontaktfläche 16. Diese ist zwischen der Lagerbuchse 15 und dem Lagerelement 6 ausgebildet. Infolge der unter Belastung sich ausbildenden balligen Form des Lagerelementes 6, führt die Verformung bei leichter Schrägstellung zu einer Anpassung der aneinanderliegenden Gleitflächen. Durch die Vergrößerung der Lagerfläche 16 wird, bei gleicher Radialkraft, eine auf das Lagerelement 6 einwirkende lokale Flächenpressung in erheblichem Maße reduziert. Infolgedessen ist ein solchermaßen gestaltetes Radiallager wesentlich unempfindlicher gegen stoßartige oder schlagende sowie reibende Belastungen, als ein aus starren Elementen bestehendes Lager.

Die Fig. 7 und 8 zeigen analog der Darstellung zu Fig. 5 und 6 eine Lagerung nach dem Stand der Technik. Bei einem Winkelversatz β einer monolithischen keramischen Lagerhülse 18 ergibt sich bei einer Schrägstellung nur die in Fig. 8 gezeigte sehr schmale Lagerfläche 17. Im Vergleich zu einer ganzflächigen Anlage der Flächen bei einem Betrieb ohne Schrägstellung, bewirkt eine Schrägstellung eine er hebliche Reduzierung der üblicherweise vorhandenen Lagerfläche. Die auf das Lager einwirkende Radialkraft wird also auf eine wesentlich kleinere Fläche verteilt. Folglich übersteigt die auf das Lagerelement einwirkende Flächenpressung und/oder die lokale Reibleistung die zulässigen Werte. Die für solche Lagerungen bisher verwendeten monolitischen Lagerhülsen in Form keramischer Werkstoffe, die wegen ihrer Bruchempfindlichkeit weder aufgeschrumpft, noch anderweitig unter Zugspannung gesetzt werden dürfen, sind in einem solchen Betriebszustand überlastet. Damit ist ihr Einsatzzweck erheblich eingeschränkt.

## Patentansprüche

1. Radiallager in Gleitlagerbauart, insbesondere zur Verwendung in Kreiselpumpen, mit einer auf einer Welle (14) angeordneten, drehmomentübertragend gestalteten Lagerhülse, die innerhalb einer Lagerbuchse (15) rotierend angeordnet ist, wobei zwischen den aufeinander gleitenden Teilen ein Spalt für ein Schmiermedium geringer Viskosität befindlich ist, die Lagerhülse aus einem Tragelement (1) und einem darauf befestigten und daran anliegenden Lagerelement (6) besteht, und das Tragelement (1) im Bereich der Anlage des Lagerelementes (6) unterschiedliche Wandstärken aufweist, **dadurch gekennzeichnet, daß** eine überwiegend matrixartig angeordnete Faserstruktur mit darin angeordneten Keramik- oder Kohlenstoffteilen das Lagerelement (6) bildet, daß eine Keramik- oder Kohlenstoff-Matrix die Faserstruktur bildet, daß das Tragelement (1) gleich oder länger als das Lagerelement (6) ausgebildet ist und daß von einem Wandstärkenmaximum im mittleren Bereich (2) des Tragelementes (1) die Wandstärke in Richtung zu den Stirnseiten (7, 8) des Lagerelementes (6) abnehmend ausgebildet ist.

2. Radiallager nach Anspruch 1, **dadurch gekennzeichnet, daß** in einem mittleren Bereich des Lagerelementes (6) das Tragelement (1) mit einem Wandstärkenmaximum versehen ist.

3. Radiallager nach Anspruch 2, **dadurch gekennzeichnet, daß** im Bereich (2) mit einem Wandstärken maximum kräfteübertragende Mittel (3) angeordnet sind.

4. Radiallager nach den Ansprüchen 1, 2 oder 3, **dadurch gekennzeichnet, daß** im Bereich der Stirnseiten (7, 8) des Lagerelementes (6) das Tragelement (1) mit Wandstärkenminima versehen ist.

5. Radiallager nach einem oder mehreren der Ansprüche 1 bis 4, **dadurch gekennzeichnet, daß** das Tragelement (1) zwischen mindestens einem dickwandig ausgebildeten Endabschnitt (10,11) im Bereich seiner Stimseiten (4,5) und einer Stirnseite (7, 8) des Lagerelementes (6) einen dünnwandigen Abschnitt (12, 13) aufweist.

6. Radiallager nach einem oder mehreren der Ansprüche 1 bis 5, **dadurch gekennzeichnet, daß** das Lagerelement (6) an einer Axialfläche des Tragelementes (1) anliegt.

7. Radiallager nach einem oder mehreren der Ansprüche 1 bis 6, **dadurch gekennzeichnet, daß** die Stirnseiten (4, 5) des Tragelementes (1) über die Stirnseiten (7, 8) des Lagerelementes (6) hinausragen.

8. Radiallager nach einem oder mehreren der Ansprüche 1 bis 7, **dadurch gekennzeichnet, daß** im Bereich der Stirnseiten (7, 8) des Lagerelementes (6) zwischen dem Tragelement (1) und einer Wellenoberfläche (9) ein oder mehrere Freiräume angeordnet sind.

## Claims

1. Radial bearing of the sliding-bearing type, in particular for use in centrifugal pumps, with a bearing sleeve arranged on a shaft (14) and designed to transmit torque, the bearing sleeve being arranged rotatably within a bearing bush (15), a gap for a low-viscosity lubricating medium being located between the parts sliding on one another, the bearing sleeve consisting of a carrying element (1) and of a bearing element (6) fastened to and bearing against the latter, and the carrying element (1) having different wall thicknesses in the region of bearing contact of the bearing element (6), **characterized in that** a fibrous structure arranged predominantly in a matrix-like manner and having ceramic or carbon particles arranged in it forms the bearing element (6), **in that** a ceramic or carbon matrix forms the fibrous structure, **in that** the carrying element (1) is designed to be equal to or longer than the bearing element (6), and **in that** the wall thickness is designed to decrease from a wall-thickness maximum in the middle region (2) of the carrying element (1) in the direction of the end faces (7, 8) of the bearing element (6).

2. Radial bearing according to Claim 1, **characterized in that**, in a middle region of the bearing element (6), the carrying element (1) is provided with a wall-thickness maximum.

3. Radial bearing according to Claim 2, **characterized in that** force-transmitting means (3) are arranged in the region (2) having a wall-thickness minimum.

4. Radial bearing according to Claims 1, 2 or 3, **characterized in that** the carrying element (1) is provided with wall-thickness minima in the region of the end faces (7, 8) of the bearing element (6).

5. Radial bearing according to one or more of Claims 1 to 4, **characterized in that** the carrying element (1) has a thin-walled portion (12, 13) between at least one thick-walled end portion (10, 11) in the region of its end faces (4, 5) and an end face (7, 8) of the bearing element (6).

6. Radial bearing according to one or more of Claims 1 to 5, **characterized in that** the bearing element (6) bears on an axial face of the carrying element (1).

7. Radial bearing according to one or more of Claims 1 to 6, **characterized in that** the end faces (4, 5) of the carrying element (1) project beyond the end faces (7, 8) of the bearing element (6).

8. Radial bearing according to one or more of Claims 1 to 7, **characterized in that** one or more free spaces are arranged between the carrying element (1) and a shaft surface (9) in the region of the end faces (7, 8) of the bearing element (6).

## Revendications

1. Palier radial de type palier lisse, notamment pour l'utilisation dans des pompes centrifuges, comprenant une douille-palier disposée sur un arbre (14), configurée de manière à transférer le couple, qui est disposée à rotation à l'intérieure d'un coussinet (15), une fente pour un lubrifiant de faible viscosité se trouvant entre les pièces coulissant l'une sur l'autre, la douille-palier se composant d'un élément porteur (1) et d'un élément de palier (6) fixé sur celui-ci et s'appliquant contre lui, et l'élément porteur (1) présentant différentes épaisseurs de paroi dans la région de l'appui de l'élément de palier (6), **caractérisé en ce que** l'élément de palier (6) est formé par une structure fibreuse disposée principalement en forme de matrice avec des pièces en céramique ou en carbone disposées dans celle-ci, **en ce qu'**une matrice en céramique ou une carbone forme la structure fibreuse, **en ce que** l'élément porteur (1) est réalisé sous forme identique ou plus longue que l'élément de palier (6) et **en ce que** l'épaisseur de paroi est réalisée de manière à diminuer dans la direction des côtés frontaux (7, 8) de l'élément de palier (6) depuis une épaisseur de paroi maximale dans la région centrale (2) de l'élément porteur (1).

2. Palier radial selon la revendication 1, **caractérisé en ce que** dans une région centrale de l'élément de palier (6), l'élément porteur (1) est pourvu d'une épaisseur de paroi maximale.

3. Palier radial selon la revendication 2, **caractérisé en ce que** dans la région (2) d'épaisseur de paroi maximale sont disposés des moyens de transfert de force (3).

4. Palier radial selon l'une quelconque des revendications 1, 2 ou 3, **caractérisé en ce que** dans la région des côtés frontaux (7, 8) de l'élément de palier (6), l'élément porteur (1) est pourvu d'une épaisseur de paroi minimale.

5. Palier radial selon l'une quelconque ou plusieurs des revendications 1 à 4, **caractérisé en ce que** l'élément porteur (1) présente une portion de paroi mince (12, 13) entre au moins une portion d'extrémité (10, 11) réalisée avec des parois épaisses dans la région de ses côtés frontaux (4, 5) et un côté frontal (7, 8) de l'élément de palier (6).

6. Palier radial selon l'une quelconque ou plusieurs des revendications 1 à 5, **caractérisé en ce que** l'élément de palier (6) s'applique contre une surface axiale de l'élément porteur (1).

7. Palier radial selon l'une quelconque ou plusieurs des revendications 1 à 6, **caractérisé en ce que** les côtés frontaux (4, 5) de l'élément porteur (1) dépassent au-delà des côtés frontaux (7, 8) de l'élément de palier (6).

8. Palier radial selon l'une quelconque ou plusieurs des revendications 1 à 7, **caractérisé en ce que** dans la région des côtés frontaux (7, 8) de l'élément de palier (6) sont disposés un ou plusieurs espaces libres entre l'élément porteur (1) et une surface (9) de l'arbre.
